# EUROPEAN PATENT APPLICATION

(11) **EP 1 628 222 A2**
(43) Date of publication of application: **22.02.2006**
(21) Application number: 05017502.5
(22) Date of filing: 11.08.2005
(51) Int. Cl.: G06F 11/36

(54) **Software operation monitoring apparatus and software operation monitoring method**

(30) Priority: 12.08.2004 JP 2004235433
(71) Applicant: NTT DoCoMo, Inc., Tokyo (JP)
(72) Inventor: Kinno, Akira c/o Intellectual Property Department, Chiyoda-ku Tokyo (JP); Suzuki, Takashi Intellectual Property Department, Chiyoda-ku Tokyo (JP); Yukimoto, Hideki Intellectual Property Department, Chiyoda-ku Tokyo (JP); Ohta, Ken c/o Intellectual Property Department, Chiyoda-ku Tokyo (JP); Nakayama, Takehiro Intellectual Property Dept., Chiyoda-ku Tokyo (JP)
(74) Representative: HOFFMANN EITLE

(57) **Abstract**

A software operation monitoring apparatus for monitoring an operation of software under execution, including: a policy information storing unit configured to store policy information for distinguishing a monitoring target operation and out-of-monitoring operation of software; an execution history recording unit configured to record an execution history of the software; a first analysis unit configured to detect the monitoring target operation from the operation of the software under execution based on the policy information; and a second analysis unit configured to analyze the execution history recorded in the execution history recording unit for the operation detected by the first analysis unit, and determine an existence of a gap of the software from a normal operation.

## Description

### CROSS REFERENCE TO RELATED APPLICATIONS

This application is based upon and claims the benefit of priority from prior Japanese Patent Application No. P2004-235433, filed on August 12, 2004; the entire contents of which are incorporated by reference herein.

### BACKGROUND OF THE INVENTION

### 1. Field of the Invention

The present invention relates to a software operation monitoring apparatus and a software operation monitoring method.

### 2. Description of the Related Art

Every computer such as a PC, a work station, a server, a router, a cellular phone and a PDA is exposed to a risk of attack from the outside or from the inside. Typical attack is one using a vulnerability of software under execution in the computer as a stepping-stone. An attacker sends a malicious code utilizing the vulnerability of the software to the computer, steals a control of a process under execution, and performs an unauthorized operation by utilizing an authority of the process.

As a first countermeasure against the attack utilizing the vulnerability of the software, there is a technique for limiting an access authority of the software. In order to secure safety of this technique, it is important to select a system resource of the minimum necessary for executing the software, and to set, for the software, the access authority to the resource concerned (for example, refer to Japanese Patent Laid-Open Publication No. 2001-337864 and Security-Enhanced Linux (http://www.nsa.gov/selinux/index.cfm)).

However, actually, it is extremely difficult to impart the access authority of the minimum necessary in consideration of the entire operations of the software. Moreover, even if the access authority of tne minimum necessary can be imparted, since the authority is imparted no matter whether each software operation is abnormal or normal, attack within a range of the access authority thus imparted will be allowed when the control of the process is stolen by the attack. Hence, when software having an access authority to a significant system resource is taken over, there is a possibility to receive a great deal of damage.

As a countermeasure against such attack utilizing the vulnerability of the software, there is disclosed a system for detecting an abnormality of the software under execution (refer to Wagner, Dean, "Intrusion Detection via Static Analysis", IEEE Symposium on Security and Privacy, 2001). In this system, a model that represents a normal operation of the software is created, and it is examined whether or not an execution sequence of the software is accepted. In such a way, even if the control of the software is stolen, an abnormal operation of the software is detected instantaneously and dealt with, thus making it possible to prevent the access authority from being stolen by the attacker.

Moreover, a file protection system for preventing an abnormal access to a file and an execution of an unauthorized access made thereto is disclosed (refer to Japanese Patent Laid-Open Publication No. 2003-233521). This system has a two-step monitoring procedure. According to the first monitoring means, a normal access and an abnormal access to a file are distinguished based on policy information, and when the abnormal access to the file is detected, the access concerned is prohibited. According to the second monitoring means, unauthorized accesses which may occur after the detection of the abnormal access to the file are detected. More specifically, information regarding such abnormal accesses which may occur after the detection of the abnormal access is recorded, and when the recorded abnormal access information satisfies a criterion, it is determined that the access concerned is an unauthorized access. The second monitoring means is provided, and thus, not only the abnormal access to the file can be prevented, but also the unauthorized access can be prevented, thus making it possible to enhance the safety of the entire system.

In the above-described system of the "Intrusion Detection via Static Analysis", it is problematic that, since it is necessary to perform compliance verification of the execution sequence to the model while the software is under execution, an overhead at the time of execution is extremely large. In particular, in a thin terminal of which processing capability is poor, the terminal including a cellular phone and a PDA, it can be said that the above-described problem is fatal. For example, in the case of applying a method of the "Intrusion Detection via Static Analysis" to electronic mail transaction software (sendmail), it takes one hour or more to process one transaction of electronic mail, and this is not practically applicable.

Moreover, the above-described system of Japanese Patent Laid-Open Publication No. 2003-233521 is premised on file protection, and accordingly, the file is not to be monitored as long as it is not accessed. Moreover, since the system concerned detects only the unauthorized action after the detection of the abnormal file access, unauthorized actions performed in the past are not detected. Accordingly, when the system is subjected to such attack as represented by buffer overflow attack that utilizes an unauthorized access to a buffer, steals a root authority of the system, executes the file access, and thereafter, does not make the unauthorized access, the system cannot detect the buffer overflow attack, and detects only the unauthorized access after the file access concerned, and the unauthorized access actually made in the buffer overflow attack is not detected though should be detected. Furthermore, a load of an overhead at the time of detecting the file access is not considered.

In consideration of the above-described problems, it is an object of the present invention to provide a software operation monitoring apparatus and a software operation monitoring method, which are for appropriately determining a gap of software from a normal operation while reducing an overhead at a time of monitoring a software operation.

### SUMMARY OF THE INVENTION

A first aspect of the present invention is to provide a software operation monitoring apparatus for monitoring an operation of software under execution, including: (A) a policy information storing unit configured to store policy information for distinguishing a monitoring target operation and out-of-monitoring operation of software; (B) an execution history recording unit configured to record an execution history of the software; (C) a first analysis unit configured to detect the monitoring target operation from the operation of the software under execution based on the policy information; and (D) a second analysis unit configured to analyze the execution history recorded in the execution history recording unit for the operation detected by the first analysis unit, and determine an existence of a gap of the software from a normal operation.

A second aspect of the present invention Is to provide a software operation monitoring method for monitoring an operation of software under execution, including: (A) storing policy information for distinguishing a monitoring target operation and out-of-monitoring operation of software; (B) recording an execution history of the software; (C) detecting the monitoring target operation from the operation of the software under execution based on the policy information; and (D) analyzing the execution history recorded in the recording step for the operation detected by the detecting step, and determining an existence of a gap of the software from a normal operation.

### BRIEF DESCRIPTION OF THE DRAWINGS

FIG. 1 is a configuration block diagram of a software operation monitoring apparatus according to a first embodiment.
FIG. 2 is an example of policy information according to the first embodiment.
FIG. 3 is a flowchart showing a software operation monitoring method according to the first embodiment.
FIG. 4 is a configuration block diagram of a software operation monitoring apparatus according to a second embodiment.
FIG. 5 is an example of policy information according to the second embodiment.
FIG. 6 is an example of an operation model according to the second embodiment (No. 1).
FIG. 7 is an example of a software source code according to the second embodiment.
FIG. 8 is an example of an operation model according to the second embodiment.
FIG. 9 is a flowchart showing a software operation monitoring method according to the second embodiment.
FIG. 10 is a configuration block diagram of a software operation monitoring apparatus according to a third embodiment.
FIG. 11 is an example of policy information according to the third embodiment.
FIG. 12 is a flowchart showing a software operation monitoring method according to the third embodiment.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

In first to third embodiments, a first analysis unit that is lightweight and surely detects an operation of software having a possibility to seriously affect a system is disposed at a previous stage of a second analysis unit that is heavy but can detect a gap of the software from a normal operation at a sufficiently low undetection rate (where an unassumed operation is not detected) and a sufficiently low erroneous detection rate (where a normal operation is detected as the unassumed operation). In such a way, effects are obtained, that it is made possible to exclude, by the first analysis unit, a large number of software execution sequences from objects to be analyzed by the second analysis unit, and that an overhead required for monitoring the software operation is reduced to a great extent.

However, since it is possible to remove an erroneous detection at the second analysis unit, the erroneous detection can be permitted at the first analysis unit. Specifically, if the first analysis unit is designed so as to be lightweight and to have a sufficiently low occurrence probability of an undetection though causing the erroneous detection, then a software operation monitoring mechanism of the embodiments of the present invention can be realized.

### <First Embodiment>

### (Software operation monitoring apparatus)

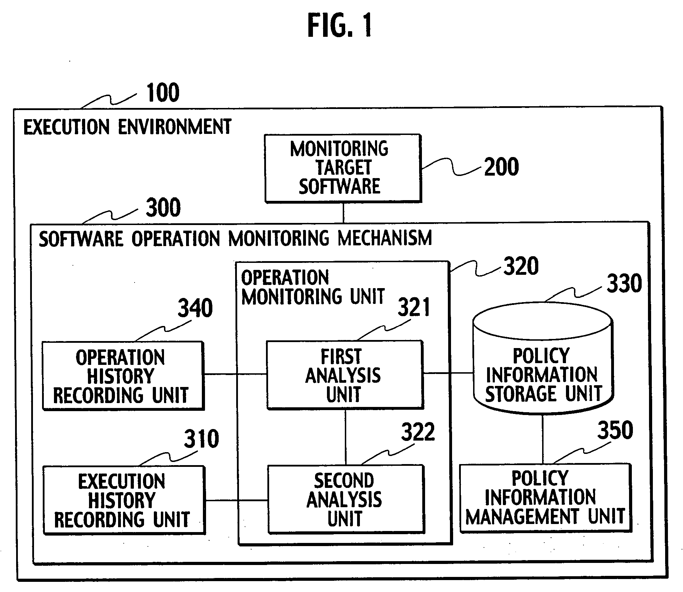

As shown in FIG. 1, a software operation monitoring mechanism (software operation monitoring apparatus) 300 according to a first embodiment includes an execution history recording unit 310, an operation monitoring unit 320, a policy information storage unit 330, an operation history recording unit 340, and a policy information management unit 350. In FIG. 1, the software operation monitoring unit 300 is executed on an execution environment 100 of software in a similar way to monitoring target software 200. Here, an "execution history" refers to an execution history of software of an arithmetic function, a system call, or the like, which is called by the software to be monitored.

The execution history recording unit 310 monitors a function, a system call and the like, which are called by the monitoring target software, records the function, the system call and the like as execution histories, and provides the recorded execution histories in response to a request of a second analysis unit 322 in the operation monitoring unit 320. The execution history recording unit 310 may record the entire monitored execution histories. However, it is conceived that a storage capacity for recording the execution histories is small in a terminal of which capability is small, such as a cellular phone and a PDA, and accordingly, recording efficiency is required. In order to solve this problem, for example, the execution history recording unit 310 may delete the execution histories from an older one based on a set recording period at a time of recording the histories concerned. Moreover, at the time of recording the execution histories, the execution history recording unit 310 may perform the deletion based on a limitation on a set storage capacity.

The operation monitoring unit 321 includes a first analysis unit 321 and the second analysis unit 322.

The first analysis unit 321 examines an operation of the monitoring target software 200 based on policy information acquired from the policy information storage unit 330, and in the case of having detected an monitoring target operation (unassumed operation) of the monitoring target software 200, issues a notice to this effect to the second analysis unit 322.

The second analysis unit 322 acquires the execution history of the monitoring target software from the execution history recording unit 310 at a moment of the detection notice of the monitoring target operation as an occasion, determines whether there is a gap of the execution history from a normal operation of the software, and outputs a result of the determination.

The operation history recording unit 340 records the operation history of the software, and provides the recorded operation history in response to a request of the first analysis unit 321. Here, a "operation history" refers to operation history of the past software, such as a file accessed by the software, and a instruction generated by the software, and operation history till the software is called, such as an order of starting the software. In this case, the first analysis unit 321 detects the monitoring target operation based on the operation history and the policy information. By adopting such a configuration, an analysis based on the operation history can be performed, and an effect of improving detection accuracy of the monitoring target operation is obtained.

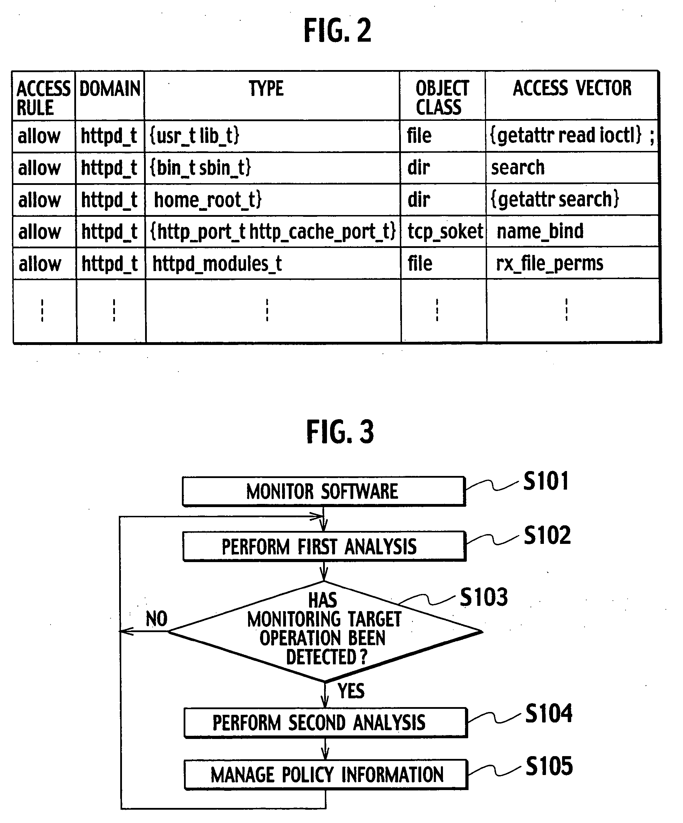

The policy information storage unit 330 stores policy information as shown in FIG. 2. As the policy information, an access rule to a system resource becoming the monitoring target operation of the software or an out-of-monitoring target operation thereof is set. Here, the "system resource" refers to a necessary resource at a time of executing software, such as a file accessed by the software, the system call, a state of a stack, a state of an argument, a state of a heap.

FIG. 2 is a table in which a security policy of SELinux (refer to Security-Enhanced Linux (http://www.nsa.gov/selinux/index.cfm)) is quoted. This table is a part of default setting of an Apache HTTP server. In the table, rules are defined, which describe "what type of operations (access vectors) are enabled for system resources grouped in type by httpd processes (httpd_t domains)". For example, a system resource assumed to be accessed by the httpd process in a certain execution environment is excluded from the policy information. In such a way, it is made possible to detect only an unassumed access (monitoring target operation) by the httpd process.

Moreover, even if the system resource is one assumed to be accessed, if the system resource is an extremely significant one such as a file containing personal information of customers, the system resource can be excluded from the policy information on purpose, and can be set as a monitoring target (that is, target to be monitored). By making a setting in such a way, every time when the highly significant system resource is accessed, the second analysis unit 322 is activated, thus making it possible to enhance the safety.

The policy information management unit 350 manages the access of the monitoring target software 200 to the system resource, creates the policy information, and stores the policy information in the policy information storage unit 330. For example, it is assumed that the policy information shown in FIG. 2 is stored in the policy information storage unit 330. When the monitoring target software 200 does not access a system resource of a home_root_t type, the policy information management unit 350 newly creates, among the policy information, policy information from which the policy information regarding the system resource of the home_root_t type is deleted, and stores the created policy information in the policy information storage unit 330. Such a change of the policy information may be performed while the software is being executed.

Note that the policy information management unit 350 may be connected to a network, and may create the policy information in accordance with an instruction from the network. Moreover, the policy information management unit 350 may be connected to an external device, and may create the policy information in accordance with an instruction from the external device. Furthermore, the policy information management unit 350 may create the policy information by combining information obtained as a result of managing the access of the monitoring target software 200 to the system resource and information (instruction from the network or the external device) from the outside.

In the case where it has been determined in the software operation monitoring mechanism 300 that the operation of the monitoring target software 200 has a gap from the normal operation, the execution environment 100 deals with the case by halting the software concerned, and so on, thus making it possible to restrict damage owing to the abnormal operation of the software to the minimum.

Moreover, in order to secure that the software operation monitoring mechanism 300 is not manipulated, the software operation monitoring mechanism 300 may be realized on an unrewritable ROM, and may be provided. Furthermore, for the same purpose, an electronic signature may be imparted to the software operation monitoring mechanism 300 when the software operation monitoring mechanism 300 is provided, and the electronic signature may be verified at the time of operating the software operation monitoring mechanism 300. Still further, for the same purpose, when being rebooted, the software operation monitoring mechanism 300 may be returned to a state of the time of being provided, by using a safe boot technology.

Moreover, the execution history recording unit 310, the policy information storage unit 330 and the operation history recording unit 340 are recording media recording the above-described information. Specific recording media include, for example, a RAM, a ROM, a hard disk, a flexible disk, a compact disc, an IC chip, a cassette tape, and the like.

Furthermore, though not shown, the software operation monitoring apparatus may include an input/output unit for inputting or outputting data. Instruments such as a keyboard and a mouse are used as the input means, and the input unit also includes a floppy disk (registered trademark) drive, a CD-ROM drive, a DVD drive, and the like. When an input operation is performed from the input unit, corresponding key information and positional information are transmitted to the operation monitoring unit 320. Moreover, a screen of a monitor or the like is used as the output unit, and a liquid crystal display (LCD), a light-emitting diode (LED) panel, an electroluminesoence (EL) panel and the like are usable. The output unit outputs the determination result of the second analysis unit 322. Moreover, the input/output unit may function as communication means for making communication with the outside through the Internet or the like.

Moreover, the software operation monitoring apparatus according to the first embodiment can be configured to include a central processing unit (CPU), and to build the second analysis unit 322 and the like as modules in the CPU. These modules can be realized by executing a dedicated program for utilizing a predetermined program language in a general-purpose computer such as a personal computer.

Furthermore, though not shown, the software operation monitoring apparatus may include a program holding unit for storing a program for allowing the central processing unit (CPU) to execute first analysis processing, second analysis processing, and the like. The program holding unit is a recording medium such as the RAM, the ROM, the hard disk, the flexible disk, the compact disc, the IC chip, and the cassette tape. According to the recording media as described above, storage, carriage, sale and the like of the program can be performed easily.

### (Software operation monitoring method)

Next, a software operation monitoring method according to the first embodiment will be described by using FIG. 1 and FIG. 3.

In Step S101 of FIG. 3, the operation monitoring unit 320 monitors the monitoring target software 200 under execution.

First, in Step S102, the first analysis unit 321 compares the policy information stored in the policy information storage unit 330 and the operation of the monitoring target software 200 with each other, and analyzes the operation concerned.

Subsequently, in Step S103, the first analysis unit 321 determines whether or not the monitoring target operation has been detected. In the case of having detected the monitoring target operation, the method proceeds to Step S104, and otherwise, the method returns to Step S102.

Next, in Step S104, for the operation detected by the first analysis unit 321, the second analysis unit 322 analyzes the execution history recorded in the execution history recording unit 310, and determines the existence of the gap of the software from the normal operation.

Further, in Step S105, the policy information management unit 350 manages the access of the monitoring target software 200 to the system resource, creates the policy information, and stores the policy information in the policy information storage unit 330. Such a change of the policy information may be performed at any timing, and is not limited to the timing shown in Step S105.

### (Function and effect)

According to the software operation monitoring apparatus and the software operation monitoring method according to the first embodiment, the first analysis unit 321 that surely detects the monitoring target operation of the software is disposed at the previous stage of the second analysis unit 322 that is heavy but can surely detect the gap of the software from the normal operation, thus making it possible to reduce an activation frequency of the second analysis unit 322. Accordingly, the gap of the software from the normal operation can be appropriately determined while an overhead of the entire detection system at the time of monitoring the software operation is being reduced.

Moreover, in the software operation monitoring apparatus and the software operation monitoring method according to the first embodiment, as the policy information, the access rule to the system resource becoming the monitoring target operation of the software or the out-of-monitoring target operation thereof is set. Therefore, when the access of the software to the system resource occurs, the first analysis unit 321 can screen the out-of-monitoring target access (access not to be monitored), and can activate the second analysis unit 322 only in the case of having detected the monitoring target access (access to be monitored).

Furthermore, the access rule is set so that the access to the significant system resource can become the monitoring target, and in such a way, the second analysis unit 322 can also be activated every time when a dangerous access occurs. Therefore, the first analysis unit 321 that is lightweight and can surely detect the dangerous access can be realized, and an effect of improving the safety of the detection system is obtained.

Still further, it is preferable that the above-described system resource be the system call. According to the software operation monitoring apparatus and the software operation monitoring method, which are as described above, it is made possible for the first analysis unit 321 to screen an access to an out-of-monitoring target system call at the time of creating the system call from the software to an operating system, and it is made possible for the first analysis unit 321 to activate the second analysis unit 322 only in the case of having aetectea an access to a monitoring target system call. Therefore, it is made possible to reduce the activation frequency of the second analysis unit 322, and an effect of reducing the overhead of the entire detection system under execution is obtained.

Moreover, the policy information may describe either the out-of-monitoring operation of the software or the monitoring target operation thereof.

In the case of describing the out-of-monitoring operation, the policy information just needs to contain only information that hardly affects the system, which is easy for a system administrator to determine. In such a way, in the first analysis unit 321, it is made possible to surely detect an operation that affects the system, and an effect of improving the safety of the detection system is obtained.

Meanwhile, in the case of describing the monitoring target operation, the policy information just needs to contain only an operation for securing safety of the minimum necessary. This leads to prevention of unnecessary execution of the second analysis unit 322 while securing safety of the minimum necessary for a service provider to provide a service, and the effect of reducing the overhead of the entire detection system under execution is obtained.

Moreover, the software operation monitoring apparatus according to the first embodiment includes the policy information management unit 350, and accordingly, can change a sensitivity of the first analysis unit 321, and can adjust the activation frequency of the second analysis unit 322. Therefore, it is made possible to dynamically adjust performance of the software operation monitoring apparatus. For example, the performance of the software operation monitoring apparatus can be enhanced in the case where an environment of using the computer is safe, and the safety can be enhanced in an environment of using the computer, where the computer is possibly attacked.

Furthermore, the software operation monitoring apparatus according to the first embodiment includes the operation history recording unit 340, and accordingly, it is made possible for the first analysis unit 321 to examine the access of the software to the system resource in consideration of the history until the software is called. Therefore, an examination is enabled in consideration of not only the information of the software under execution at present but also the information until the software concerned is called, and the effect of improving the detection accuracy of the monitoring target operation is obtained. Moreover, the access rule is detailed, thereby also bringing an effect of reducing the activation frequency of the second analysis unit 322.

Still further, the second analysis unit 322 is capable of examining an operation of software, which is contained in an activation history of the software. In such a way, the second analysis unit 322 becomes capable of dealing with also the case where software that has directly or indirectly activated the software concerned is operating abnormally.

### <Second Embodiment>

In the second embodiment, the software operation monitoring mechanism described in the first embodiment is introduced into an operating system of the computer.

### (Software operation monitoring apparatus)

A software operation monitoring mechanism (software operation monitoring apparatus) 300 according to the second embodiment is implemented in a kernel 500 that is software for providing a basic function of the operating system, and monitors one or more monitoring target softwares 200a, 200b, and 200c. A monitoring result is used in an access control unit 530, a policy information management unit 540, and a process management unit 550, thus making it possible to perform the dealing such as limiting the access to the system resource and halting the process.

In order to monitor the operation of the software under execution, the software operation monitoring mechanism 300 utilizes a kernel hook 510. The kernel hook 510 monitors communications (system calls and the like) between the monitoring target softwares 200a, 200b and 200c and the kernel 500. In the case of having received a specific request message, the kernel hook 510 provides, to a module predetermined before processing of the request message concerned, a function to transfer the request message concerned.

The first analysis unit 321 detects the monitoring target operations of the monitoring target softwares 200a, 200b and 200c based on the policy information. For example, the first analysis unit 321 utilizes the policy information shown in FIG. 2, and in the case of having detected an access request to a system resource other than the previously determined ones, activates the second analysts unit 322.

In the second embodiment, it is possible to set the policy information utilized by the first analysis unit 321 independently of the access authority originally owned by the process. For example, even if the access authority is one to the system resource owned by the process, the access authority can be excluded from the policy information. In such a way, it is made possible to perform the processing for activating the second analysis unit 322 every time when the extremely significant system resource is accessed.

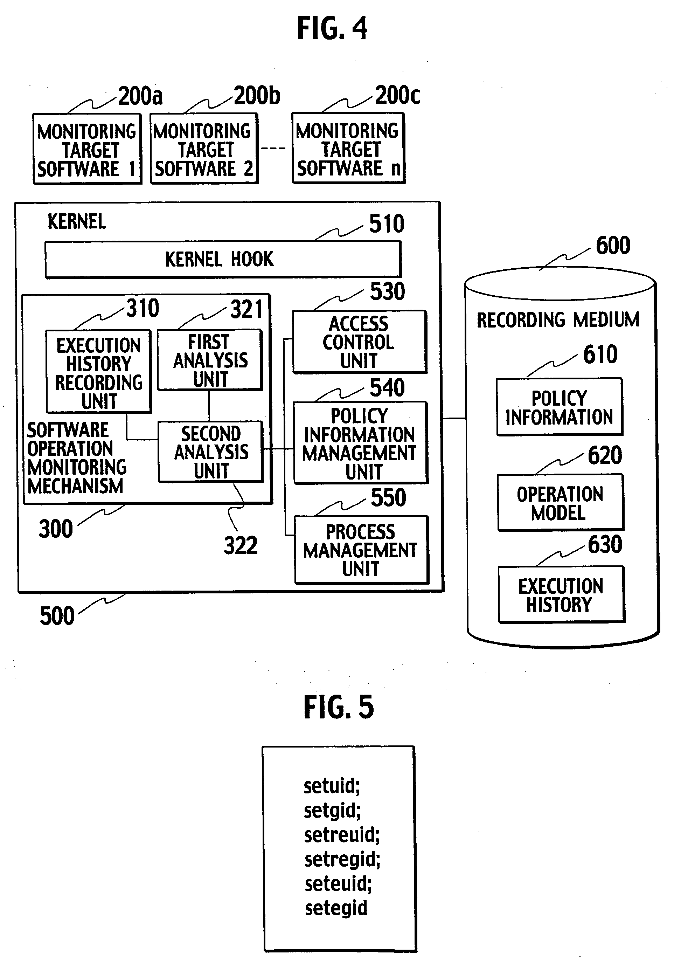

Moreover, the monitoring target operation may be set in the policy information. For example, system calls that possibly affect the system among the system calls created for the operating system by the softwares are listed in advance in the policy information. In the first analysis unit 321, it may be analyzed whether or not the system calls created by the monitoring target softwares 200a, 200b and 200c are the system calls written in the policy information. In the first analysis unit 321, it has been detected that the system calls written in the policy information are created by the softwares under execution, and in the second analysis unit 322, more detailed analysis is performed. FIG. 5 is an example of the policy information, in which the system calls for changing execution authorities of the softwares are listed. These system calls have extremely high possibilities to affect the system. As described above, if the monitoring target operations are set in the policy information, the overhead of the entire detection system under execution can be reduced while the system safety of the minimum necessary to provide the service is being secured.

The second analysis unit 322 examines whether or not the execution histories of the monitoring target softwares 200a, 200b and 200c, which are recorded in the execution history recording unit 310, are accepted by an operation model 620 of each of the softwares concerned. For example, the second analysis unit 322 utilizes the operation model 620 taking the execution history system call as the recording target (target to be recorded) and entirely recording patterns of the system calls, which can occur in the normal operations of the softwares. When the recorded system call strings do not coincide with any pattern written in the operation model 620, the second analysis unit 322 determines that the softwares under execution have gaps from the normal operations of the softwares.

Next, a specific analysis method in the second analysis unit 322 will be described.

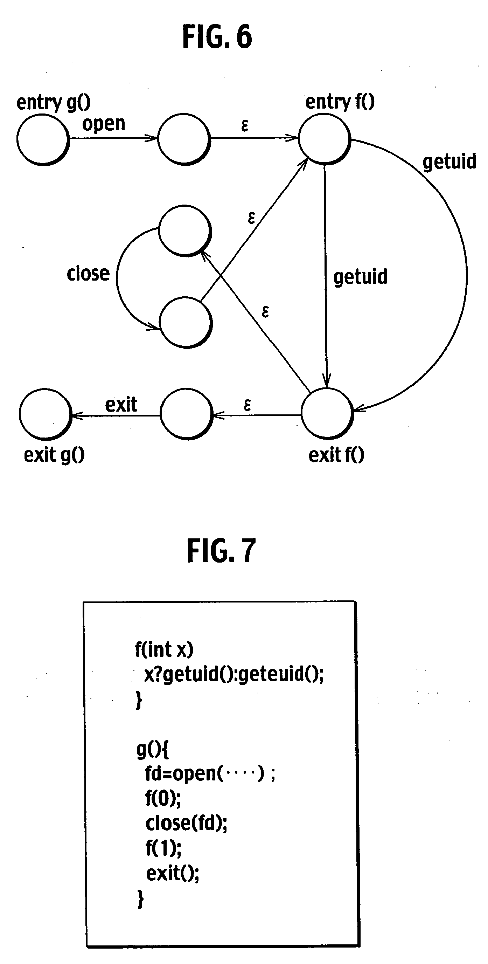

FIG. 6 is an example of the operation model, in which a generation pattern of the system call is modeled by the finite state automata (FSA) (refer to Wagner, Dean, "Intrusion Detection via Static Analysis", IEEE Symposium on Security and Privacy, 2001). In FIG. 6, a software source code shown in FIG. 7 is statically analyzed, and states of the software before and after the generation of the system call are regarded as nodes by taking a generation of the system call as an edge, thus obtaining the FSA. Note that function callings are regarded as e transitions. The second analysis unit 322 acquires the system calls created for the operating system by the software under execution, inputs a list thereof in which the system calls are arrayed in a created order as an input example of the FSA as the operation model, and analyzes whether or not the inputted strings are accepted. When taking FIG. 6 as an example, while an inputted string "open getuid close geteuid exit is accepted, an inputted string "open close getuid geteiud exitc is not accepted. Hence, it is detected that the generation of the latter system call has a gap from the normal operation.

Moreover, besides utilizing the FSA, the N-gram determination may also be used. Specifically, under an environment where the normal operation is secured, the system call created under operation of the software is acquired, and the system call strings arrayed in a time series are learned. The system call strings thus learned are taken as the operation model, and under an environment where the normal operation is not secured at the time of analysis, an analysis target system call string formed of N pieces of the system calls created under operation of the software is created, and it is determined whether or not the analysis target system call string exists as a subsequence in the operation model.

Moreover, the second analysis unit 322 utilizes an operation model taking arguments of the system calls as the targets to be recorded by the execution history recording unit 310 and entirely recording generation patterns of the system call arguments that can occur in the normal operations of the softwares. For example, the second analysis unit 322 utilizes statistical patterns (character string lengths, character appearance distributions and the like of arguments) of the system call arguments. When each statistical pattern of the recorded system call arguments does not statistically coincide with any pattern written in the operation model, the second analysis unit 322 may determine that the software under execution has a gap from the normal operations of the softwares.

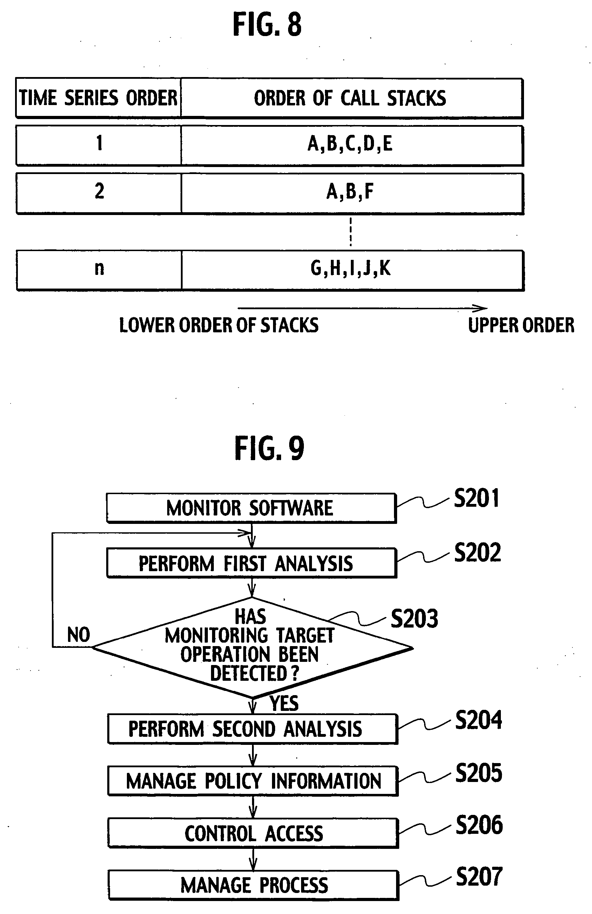

Furthermore, for example, when a generation pattern of the system calls and a generation pattern of states of call stacks, which can occur in the normal operations of the softwares, in which the system calls and states of call stacks to be used by the monitoring target softwares 200a, 200b and 200c for the function calling and the like are taken as the targets to be recorded by the execution history recording unit 310, do not coincide with any pattern written in the operation model, the second analysis unit 322 may determine that the softwares under execution have gaps from the normal operations of the softwares. FIG. 8 is an example of the operation model representing the generation pattern of the states of the call stacks. The call stacks include return addresses of the functions, the arguments of the function callings and the like as contents. Here, it is assumed that the states of the call stacks are return addresses associated with the respective function callings, and are orders that the call stacks are stacked. The operation model is one in which the states of the call stacks are arrayed in a time series order. The second analysis unit 322 analyzes the generation pattern of the system calls, and determines whether or not the generation pattern in which the states of the call stacks recorded in the execution history recording unit 322 are arrayed in the time series order exists in the generation pattern of the states of the call stacks, which is represented in the operation model, thereby determining whether or not the software under execution has a gap from the normal operation.

Moreover, the second analysis unit 322 may take, as the targets to be recorded by the execution history recording unit 310, all of the system calls, the arguments of the system calls, the states of the call stacks to be used by the monitoring target softwares 200a, 200b and 200c for the function calling and the like, or combinations of these. At this time, each operation model is made to have a pattern corresponding to the recording targets of the execution history recording unit 310 among the generation pattern of the system calls, the statistical pattern of the system call arguments, and the generation pattern of the states of the call stacks, which can occur in the normal operations of the softwares. The second analysis unit 322 performs the analysis by using each operation model associated with the target to be recorded by the execution history recording unit 310.

Furthermore, a determination result by the second analysis unit 322 is utilized in the access control unit 530, the policy information management unit 540, and the process management unit 550.

The access control unit 530 limits the access to the system resource in response to the determination result by the second analysis unit 322.

The policy information management unit 540 creates and updates the policy information in response to the determination result by the second analysis unit 322, and stores the policy information 610.

The process management unit 550 halts the process (software under execution) in response to the determination result by the second analysis unit 332.

Note that, in FIG. 4, the policy information 610, the operation model 620, and the execution history 630 are stored in a recording medium 600. The recording medium includes, for example, the RAM, the ROM, the hard disk, the flexible disk, the compact disc, the IC chip, the cassette tape, and the like. The policy information 610, the operation model 620, and the execution history 630 may be stored in the recording medium 600 as shown in FIG. 4, or may be implemented on the kernel 500.

### (Software operation monitoring method)

Next, a software operation monitoring method according to the second embodiment will be described by using FIG. 4 and FIG. 9.

First, Steps 6201 to S203 are similar to Steps S101 to S103 of FIG. 3, and accordingly, description thereof will be omitted here.

In Step S204, the second analysis unit 322 analyzes the execution history recorded in the execution history recording unit 310 for the operation detected by the first analysis unit 321, and determines the existence of the gap of the software from the normal operation. At this time, the second analysis unit 322 determines whether or not the execution history is accepted by the operation model 620, thereby determining the existence of the gap of the software from the normal operation. The operation model for use is one entirely recording the generation patterns of the system calls created in the normal operation of the software, one entirely recording the generation patterns of the system call arguments created in the normal operation of the software, one entirely recording the generation patterns of the contents of the call stacks created in the normal operation of the software, and the like.

Step S205 is similar to Step S105 of FIG. 3, and accordingly, description thereof will be omitted here.

Next, in Step S206, the access control unit 530 limits the access to the system resource in response to the determination result by the second analysis unit 322.

Next, in Step S207, the process management unit 550 halts the process (software under execution) in response to the determination result by the second analysis unit 322.

### (Function and effect)

According to the software operation monitoring apparatus and the software operation monitoring method according to the second embodiment, the second analysis unit 322 determines whether or not the execution history recorded in the execution history recording unit 310 is accepted by the operation model 620, thus making it possible to determine the existence of the gap of the software from the normal operation. Therefore, an effect that it becomes easy to create a rule for determining the gap from the normal operation is obtained.

Moreover, the execution history recording unit 310 can be set to record the system calls created in the normal operation of the software, and the operation model 620 can be set to entirely record the generation patterns of the system calls created in the normal operation of the software. Therefore, the operating system can surely record the execution history. The execution history recording unit 310 is safe as long as the control of the very operating system is not stolen by the attacker, and accordingly, an effect of enhancing the safety of the second analysis unit 322 is obtained.

Furthermore, the execution history recording unit 310 can be set to record the arguments of the system calls created by the software for the operating system, and the operation model 620 can be set to entirely record the generation patterns of the system call arguments created in the normal operation of the software. Therefore, it can be made difficult for the attacker to the system to perform a pseudo attack that makes the system into a null operation by using the arguments of the system calls with fineness. The execution history recording unit 310 is safe as long as the control of the very operating system is not stolen by the attacker, and accordingly, the effect of enhancing the safety of the second analysis unit 322 is obtained.

Moreover, the execution history recording unit 310 can be set to record the contents of the call stacks to be used by the software for the function calling, and the operation model 620 can be set to entirely record the generation patterns of the contents of the call stacks created in the normal operation of the software. Therefore, it is made possible to detect an impossible-route attack that cannot be detected only by the system call generation pattern, and it can be made difficult for the attacker to the system to make the attack. The execution history recording unit 310 is safe as long as the control of the very operating system is not stolen by the attacker, and accordingly, the effect of enhancing the safety of the second analysis unit 322 is obtained.

### <Third Embodiment>

In a third embodiment, the first analysis unit analyzes a plurality of the monitoring target operations, and the second analysis unit performs different analyses in response to the applicable monitoring target operations.

### (Software operation monitoring apparatus)

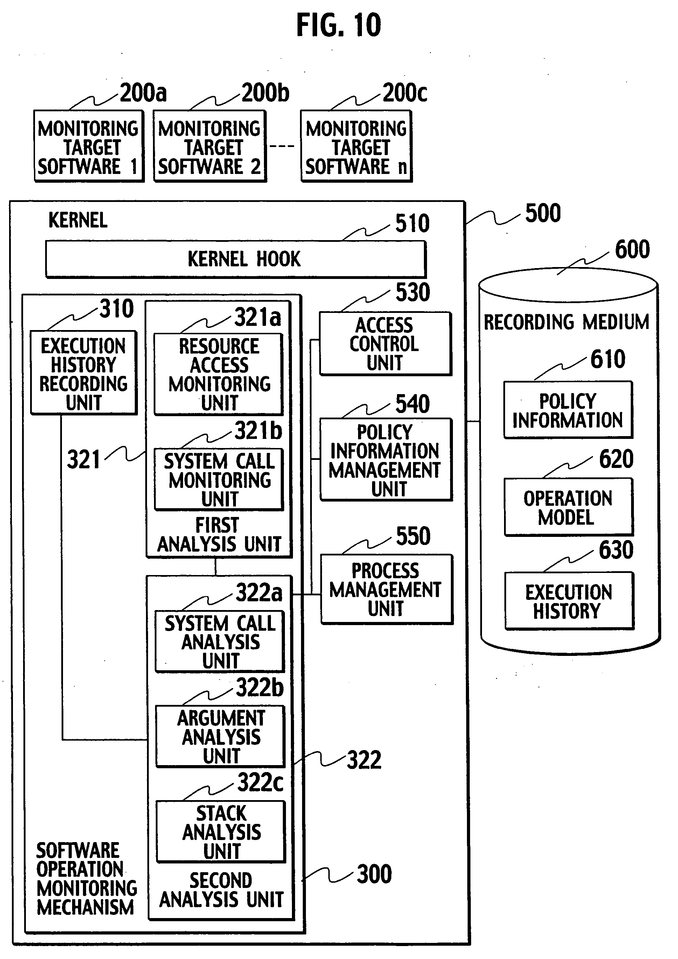

As shown in FIG. 10, a software operation monitoring apparatus according to the third embodiment has a similar configuration to that of the second embodiment except that the configurations of the first analysis unit 321 and the second analysis unit 322 are different from those in the second embodiment.

The first analysis unit 321 includes a resource access monitoring unit 321a that monitors the accesses to the system resource, and a system call monitoring unit 321b that monitors the system calls created for the operating system by the monitoring target softwares 200a, 200b and 200c.

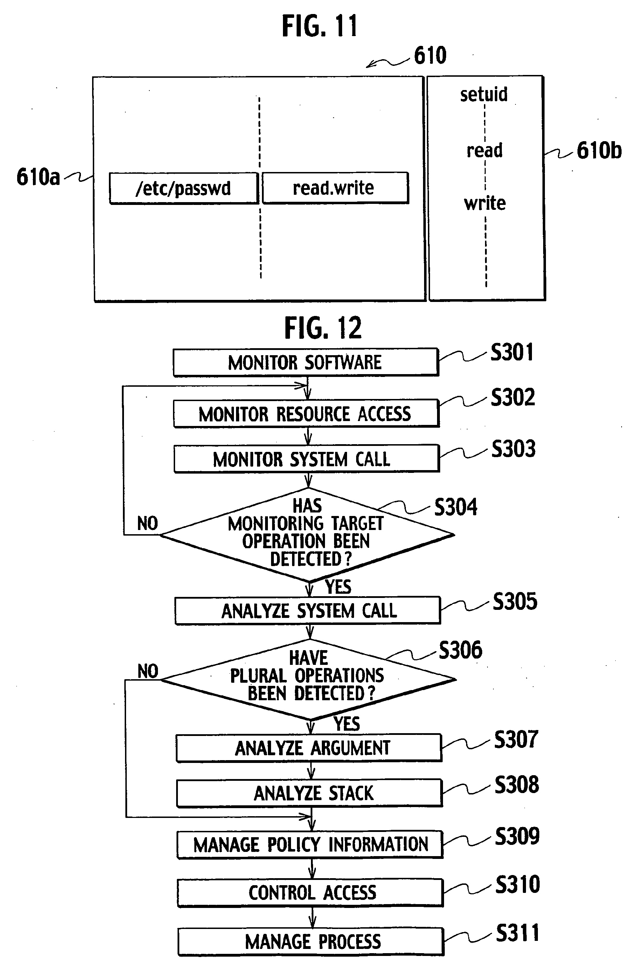

The resource access monitoring unit 321a and the system call monitoring unit 321b detect the monitoring target operations of the monitoring target softwares 200a, 200b and 200c based on the policy information 610. As shown in FIG. 11, the policy information includes first policy information 610a writing the access rules of the system resource, and second policy information 610b listing the system calls that possibly affect the system. In the first policy information 610a, file names to be handled by the access rules, and the system calls having high possibilities to affect applicable files, are written.

The second analysis unit 322 includes a system call analysis unit 322a that analyzes the generation patterns of the system calls, an argument analysis unit 322b that analyzes the statistical pattern of the system call arguments, and a stack analysis unit 322c that analyzes the generation patterns of the states of the call stacks. The second analysis unit 322 includes a mechanism for selecting these three analysis units based on an analysis result of the first analysis unit 321.

For example, as a result of monitoring the monitoring target softwares 200a, 200b and 200c by using the policy information of FIG. 11 in the first analysis unit 321, when it has been detected in the resource access monitoring unit 321a that the file corresponding to the file name written in the first policy information 610a is accessed, the second analysis unit 322 analyzes, by the system call analysis unit 322a, the generation pattern of the system call in the execution history recorded in the execution history recording unit 310.

In a similar way, as a result of monitoring the monitoring target softwares 200a, 200b and 200c by using the policy information of FIG. 11 in the first analysis unit 321, when it has been detected in the system call monitoring unit 321b that the system calls written in the second policy information 610b are created by the monitoring target softwares 200a, 200b and 200c, the second analysis unit 322 analyzes the generation patterns of the system calls in the execution history recorded in the execution history recording unit 310 by the system call analysis unit 322a.

Meanwhile, when the resource access monitoring unit 321a has detected in the first analysis unit 321 that the access is made to the file corresponding to the file name written in the first policy information 610a, and further, the system call monitoring unit 321b has simultaneously detected in the first analysis unit 321 that the system calls associated with the file name concerned are created, the second analysis unit 322 does not only use the system call monitoring unit 322a but also uses the argument monitoring unit 322b to analyze the statistical pattern of the system call arguments, and uses the stack analysis unit 322c to analyze the generation patterns of the states of the call stacks.

The policy information management unit 540 shown in FIG. 10 manages the accesses of the monitoring target softwares 200 to the system resource, creates the policy information, and stores the policy information 610. At this time, the policy information management unit 540 changes the policy information in response to the respective analysis results of the system call analysis unit 322a, argument analysis unit 322b and stack analysis unit 322c of the second analysis unit 322. Specifically, the policy information management unit 540 has change tables corresponding to the analysis results of the system call analysis unit 322a, the argument analysis unit 322b and the stack analysis unit 322c, and changes the different policy information depending on which of the analysis units has determined the existence of the gap.

Moreover, the access control unit 530 limits the accesses to the system resources in response to the determination results by the second analysis unit 322. At this time, the access control unit 530 limits the accesses in response to the respective analysis results of the system call analysis unit 322a, argument analysis unit 322b and stack analysis unit 322c of the second analysis unit 322. Specifically, the access control unit 530 has different change tables corresponding to the analysis results of the system call analysis unit 322a, the argument analysis unit 322b and the stack analysis unit 322c, and limits the accesses to the different system resources depending on which of the analysis units has determined the existence of the gap.

Furthermore, the process management unit 550 halts the process (software under execution) in response to the determination results by the second analysis unit 322. At this time, the process management unit 550 limits the accesses in response to the respective analysis results of the system call analysis unit 322a, argument analysis unit 322b and stack analysis unit 322c of the second analysis unit 322. Specifically, the process management unit 550 has different change tables corresponding to the analysis results of the system call analysis unit 322a, the argument analysis unit 322b and the stack analysis unit 322c, and halts the different processes depending on which of the analysis units has determined the existence of the gap.

The execution history recording unit 310 and the recording medium 600 are similar to those of the second embodiment, and accordingly, description thereof will be omitted here.

### (Software operation monitoring method)

Next, a software operation monitoring method according to the third embodiment will be described by using FIG. 10 and Fig. 12.

In Step S301, the operation monitoring unit 320 monitors the software 200 under execution.

First, in Step S302, the resource access monitoring unit 321a of the first analysis unit 321 monitors the accesses to the system resources. Next, in Step S303, the system call monitoring unit 321b of the first analysis unit 321 monitors the system calls created for the operating system by the monitoring target softwares 200a, 200b and 200c.

Subsequently, in Step S304, the resource access monitoring unit 321a or the system call monitoring unit 321b determines whether or not the monitoring target operation has been detected. When the monitoring target operation has been detected, the method proceeds to Step S305, and otherwise, the method returns to Step S302.

Next, in Step S305, the system call analysis unit 322a of the second analysis unit 322 analyzes the generation pattern of the system call for the operation detected by the first analysis unit 321. Subsequently, the system call analysis unit 322a determines the existence of the gap of the software from the normal operation.

Next, in Step S306, it is determined whether or not the monitoring target operations have been detected in both of the resource access monitoring unit 321a and the system call monitoring unit 321b. When the plurality of monitoring target operations have been detected as described above, the method proceeds to Step S307, and otherwise, the method proceeds to Step S309.

Next, in Step S307, the argument analysis unit 322b of the second analysis unit 322 analyzes the statistical pattern of the system call arguments. Subsequently, the argument analysis unit 322b determines the existence of the gap of the software from the normal operation.

Next, in Step S308, the stack analysis unit 322c of the second analysis unit 322 analyzes the generation pattern of the states of the call stacks. Subsequently, the stack analysis unit 322c determines the existence of the gap of the software from the normal operation.

Next, in step S309, the policy information management unit 540 manages the accesses of the monitoring target softwares 200 to the system resources, creates the policy information, and stores the policy information 610. At this time, the policy information management unit 540 changes the policy information in response to the respective analysis results of the system call analysis unit 322a, argument analysis unit 322b and stack analysis unit 322c of the second analysis unit 322.

Next, in Step S310, the access control unit 530 limits the accesses to the system resources in response to the determination results by the second analysis unit 322. At this time, the access control unit 530 limits the accesses in response to the respective analysis results of the system call analysis unit 322a, argument analysis unit 322b and stack analysis unit 322c of the second analysis unit 322.

Next, in Step S311, the process management unit 550 halts the process (software under execution) in response to the determination results by the second analysis unit 322. At this time, the process management unit 550 limits the accesses in response to the respective analysis results of the system call analysis unit 322a, argument analysis unit 322b and stack analysis unit 322c of the second analysis unit 322.

### (Function and effect)

According to the software operation monitoring apparatus and the software operation monitoring method according to the third embodiment, in addition to the monitoring by the first monitoring unit that performs the lightweight monitoring and the monitoring by the second monitoring unit that performs the heavy monitoring, medium-weight monitoring performed by allowing a part of the second analysis unit to function can be performed, and accordingly, it is made possible to reduce the overhead in response to the monitoring target operation.

### <Other Embodiments>

Although the present invention has been described by the above-described embodiments, it should not be understood that the statements and the drawings, which partially form the disclosure, limit the present invention. From the disclosure, various alternative embodiments, examples, and application technologies will be obvious to those skilled in the art.

For example, though description has been made in FIG. 9 and FIG. 11 that the management of the policy information (S205, S309), the access control (S206, S310) and the process management (S207, S311) are performed, a performing order is not limited to that shown in the drawings, and changes in response to the situation.

Moreover, though description has been made that the first analysis unit 321 and the second analysis unit 322 may be made into the modules and provided in one CPU, the first analysis unit 321 and the second analysis unit 322 may be individually provided in different CPUs, and made into different devices. In this case, the plural devices are connected to each other by a bus and the like.

Various modifications will become possible for those skilled in the art after receiving the teachings of the present disclosure without departing from the scope thereof.

## Claims

1. A software operation monitoring apparatus for monitoring an operation of software under execution, comprising:
a policy information storing unit configured to store policy information for distinguishing a monitoring target operation and out-of-monitoring operation of software;
an execution history recording unit configured to record an execution history of the software;
a first analysis unit configured to detect the monitoring target operation from the operation of the software under execution based on the policy information; and
a second analysis unit configured to analyze the execution history recorded in the execution history recording unit for the operation detected by the first analysis unit, and determine an existence of a gap of the software from a normal operation.

2. The software operation monitoring apparatus according to claim 1, wherein an access rule to a system resource becoming the monitoring target operation or out-of-monitoring operation of the software is set as the policy information.

3. The software operation monitoring apparatus according to claim 2, wherein the system resource is a system call.

4. The software operation monitoring apparatus according to claim 1, further comprising a policy information management unit configured to change the policy information while the software is being executed.

5. The software operation monitoring apparatus according to claim 1, further comprising an operation history recording configured to record an operation history of the software under execution,
wherein the first analysis unit detects the monitoring target operation from the operation of the software under execution based on the operation history recorded in the operation history recording unit and the policy information.

6. The software operation monitoring apparatus according to claim 1, further comprising an operation model storage unit configured to store an operation model representing the normal operation of the software,
wherein the second analysis unit determines whether or not the execution history recorded in the execution history recording unit is accepted by the operation model, thereby determining the existence of the gap of the software from the normal operation.

7. The software operation monitoring apparatus according to claim 6, wherein the execution history recording unit records a system call created for an operating system by the software, and
the operation model is one entirely recording generation patterns of the system call created by the normal operation of the software.

8. The software operation monitoring apparatus according to claim 6, wherein the execution history recording unit records an argument of a system call created for an operating system by the software, and
the operation model is one entirely recording generation patterns of the argument of the system call created by the normal operation of the software.

9. The software operation monitoring apparatus according to claim 6, wherein the execution history recording unit records a content of a call stack to be used by the software for a function calling, and
the operation model is one entirely recording generation patterns of the content of the call stack created by the normal operation of the software.

10. The software operation monitoring apparatus according to claim 1, wherein the first analysis unit comprises: a resource access monitoring unit for monitoring an access to a system resource; and a system call monitoring unit for monitoring a system call created for an operating system by the software, and
the second analysis unit performs an analysis, in response to monitoring results of the resource access monitoring unit and the system call monitoring unit, by partially or entirely using a system call analysis unit for analyzing generation patterns of the system call, an argument analysis unit for analyzing an argument of the system call, and a stack analysis unit for analyzing generation patterns of a state of a call stack to be used by the software for a function calling.

11. A software operation monitoring method for monitoring an operation of software under execution, comprising:
storing policy information for distinguishing a monitoring target operation and out-of-monitoring operation of software;
recording an execution history of the software;
detecting the monitoring target operation from the operation of the software under execution based on the policy information; and
analyzing the execution history recorded in the recording step for the operation detected by the detecting step, and determining an existence of a gap of the software from a normal operation.
